# EUROPÄISCHE PATENTSCHRIFT

(11) **EP 1 063 130 B1**
(45) Veröffentlichungstag und Bekanntmachung des Hinweises auf die Patenterteilung: **23.02.2005**
(21) Anmeldenummer: 00110471.0
(22) Anmeldetag: 17.05.2000
(51) Int. Cl.: B60R 16/02

(54) **Verfahren und Vorrichtung zur Steuerung eines Generators**
Method and means of controlling a generator
Procédé et appareil de commande d'un générateur de courant

(30) Priorität: 25.06.1999 DE 19929060
(43) Veröffentlichungstag der Anmeldung: 27.12.2000
(73) Patentinhaber: DaimlerChrysler AG, 70567 Stuttgart (DE); EvoBus GmbH, 70567 Stuttgart (DE)
(72) Erfinder: Falsett, Rainer, 64832 Babenhausen (DE); Kokes, Michael, Dr., 69253 Heiligkreuzsteinach (DE); Wirdel, Heinz, 67304 Kerzenheim (DE)

(56) Entgegenhaltungen:
- EP-A- 0 709 953
- DE-A- 4 042 347
- GB-A- 2 039 172
- US-A- 1 338 041

## Beschreibung

Die Erfindung betrifft ein Verfahren zur Steuerung eines Generators, der mechanisch über einen Riementrieb an eine mit wechselnder Last betriebene Brennkraftmaschine angekoppelt ist, bei dem die zeitliche Änderung der Drehzahl der Brennkraftmaschine ermirtelt und in Abhängigkeit davon die Generatorerregung eingestellt wird, und eine Vorrichtung zur Durchführung des Verfahrens.

Ein Verfahren bzw. eine Vorrichtung gemäß des Anspruchs 1 bzw. 3 ist aus GB 2 039 172 bekannt.

Aus der DE 28 48 556 C2 ist ein Verfahren der eingangs genannten Art zur Steuerung eines an einen Kraftfahrzeugmotor angekoppelten Generators bekannt, bei dem letzterer abgeschaltet wird, wenn der Fahrer z.B. durch entsprechend starkes Durchtreten eines Gaspedals eine starke Beschleunigung des Fahrzeugs anfordert, um in dieser Situation, die anhand einer entsprechend hohen gemessenen Drehzahländerungsrate des Motors erkannt werden kann, die volle Motorleistung ausnutzen zu können.

In der DE 43 07 907 A1 ist ein Verfahren zur Regelung der Ausgangsspannung eines an einen Fahrmotor angekoppelten Generators in einem Kraftfahrzeug beschrieben, die in Abhängigkeit vom Fahrzustand des Fahrzeugs eingestellt wird, wobei die Spannungsregelung durch entsprechende Einstellung des Erregerstroms erfolgt. Um in Beschleunigungsvorgängen dem Motor so wenig wie möglich Leistung für den Antrieb des Generators zu entziehen, ist vorgesehen, währenddessen kurzzeitig die Generatorerregung und dadurch die Generatorspannung auf einen Minimalwert zu erniedrigen. Umgekehrt wird die Generatorspannung beim Abbremsen des Fahrzeugs erhöht, um so einer Kraftfahrzeugbatterie aus Bremsenergie rekuperierte elektrische Leistung zuführen zu können.

Die DE 40 42 347 A1 offenbart eine Vorrichtung mit Generator zur Erzeugung von elektrischer Energie in einem Kraftfahrzeug, die einen Temperatursensor zur Erfassung der momentanen Motortemperatur enthält. Dabei ist vorgesehen, die Erregung des Generators nach einem Motorstart in Abhängigkeit von der erfaßten Motortemperatur zu verzögern, damit der Motor in einer Warmlaufphase durch den Generator nicht belastet wird. Insbesondere bei Standgas soll dies zu einer erheblichen Verbesserung der Rundlaufeigenschaften des Motors in der Warmlaufphase führen.

In der US 4.739.244 ist ein Generator für ein Kraftfahrzeug besch=ieben, dem ein Beschleunigungssensor zugeordnet ist. Erfaßt dieser Beschleunigungssensor eine Beschleunigung des Kraftfahrzeuges, so wird die Erregung des Generators bis auf einen Minimalstrom abgeschaltet. Dies bewirkt, daß in Betriebsphasen, in denen das Kraftfahrzeug beschleunigt wird, der Kraftfahrzeugmotor keine signifikante Antriebsleistung an den Generator verliert. Der Minimalstrom, der den Generator dennoch in diesen Betriebsphasen leicht erregt, soll gewährleisten, daß die Anzahl von Generatorumdrehungen pro Zeiteinheit anhand der in den Phasenwicklungen induzierten Spannung bestimmt werden kann.

In der US 4.659.977 ist ein Wechselstromgenerator für ein Kraftfahrzeug beschrieben, dem zu seiner Steuerung ein Mikroprozessor zugeordnet ist. Dieser Mikroprozessor wertet die Temperatur einer Batterie und verschiedene Fahrzustandsgrößen, wie Motordrehzahl und Zündverzögerungszeit, aus und nimmt unter Berücksichtigung dieser Größen eine Ansteuerung der Erregerwicklungen des Wechselstromgenerators in der Weise vor, daß die Batterie dann aufgeladen wird, wenn deren tatsächliche Klemmspannung um mehr als ein Schwellwert von einer gewünschten Klemmspannung abweicht.

Aufgabe der Erfindung ist es, ein Verfahren und eine Vorrichtung zur Steuerung eines Generators mit Riementriebkopplung an eine Brennkraftmaschine, insbesondere für ein Kraftfahrzeug, bereitzustellen, das einen Betrieb des Generators mit geringem Verschleiß des den Generator antreibenden Riemens ermöglicht.

Diese Aufgabe wird durch ein Verfahren mit den Merkmalen des Anspruchs 1 und eine Vorrichtung mit den Merkmalen des Anspruchs 3 gelöst. Dabei wird das über den Riementrieb von der Brennkraftmaschine auf den Generator übertragene Drehmoment durch entsprechende Begrenzung der Generatorerregung auf einen Riemenrutschverhinderungs-Grenzwert begrenzt. Auf diese Weise wird auch bei Betrieb eines Kraftfahrzeuges mit ständig wechselnder Last ein zu starker Abrieb des den Generator antreibenden Riemens aufgrund von Durchrutschen vermieden. Auch werden so störende Pfeifgeräusche verhindert, die beim Rutschen eines einen Generator antreibenden Riemens auftreten können. Im Rahmen dieser Begrenzung ist der Generator aber weiterhin in der Lage, eine merkliche elektrische Ausgangsleistung bereitzustellen.

In Weiterbildung des Verfahrens gemäß Anspruch 2 und der Vorrichtung gemäß Anspruch 4 erfolgt die Begrenzung der Generatorerregung durch Begrenzung des Erregerstromes auf einen maximalen Erregerstromwert, der in Abhängigkeit von der ermittelten Änderung der Drehzahl der Brennkraftmaschine bestimmt wird. Auf diese Weise kann eine präzise Begrenzung des auf den Generator übertragenen Drehmomentes in einfacher Weise umgesetzt werden.

Weitere Merkmale und Vorteile der Erfindung sind in den Zeichnungen veranschaulicht und werden nachfolgend beschrieben. Es zeigen:
- Fig. 1: einen Schaltplan eines Generators mit Generatorregler und eines angeschlossenen Bordnetzes eines Kraftfahrzeuges und
- Fig. 2: ein Blockdiagramm einer Vorrichtung zur Steuerung des Generators von Fig. 1 mit riemenrutschverhindernder Generatorerregerstrombegrenzung.

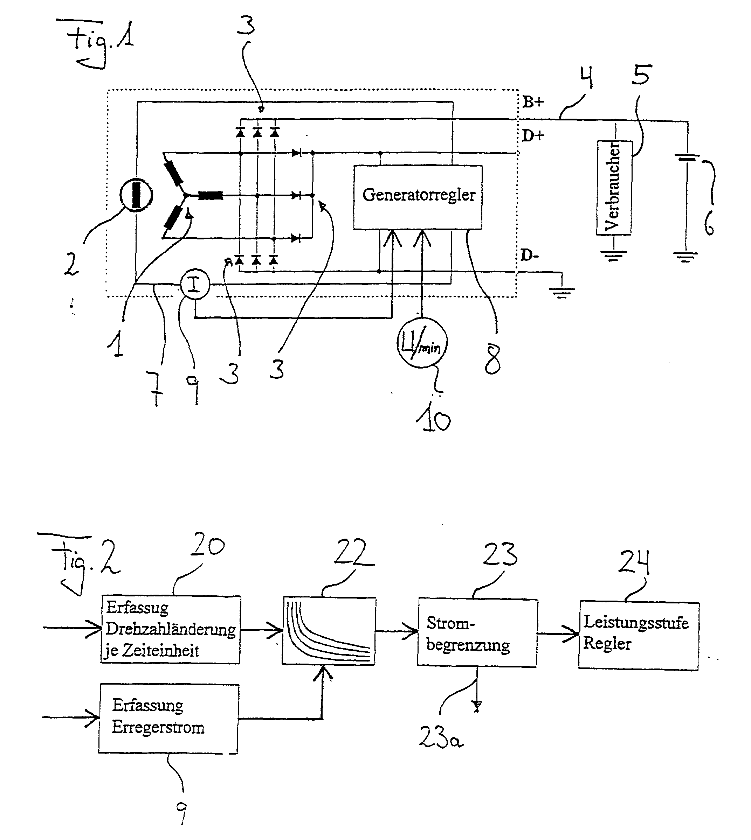

In Fig. 1 ist eine als Drehstromgenerator 1 ausgebildete Lichtmaschine für ein Kraftfahrzeug dargestellt. Der Drehstromgenerator 1 umfaßt einen Erregerstromkreis 7 mit einem Erregerfeldspulensystem 2 und hat Ausgangsklemmen, die über eine Gleichrichter-Brückenschaltung 3 Strom in ein Bordnetz 4 des Kraftfahrzeuges einspeisen. Dieses Bordnetz 4 versorgt Verbraucher 5, wie beispielsweise Lichtquellen und Elektromotoren, und eine Kraftfahrzeug-Batterie 6 mit elektrischer Energie. Zur Steuerung des Stromflusses durch das Erregerfeldspulensystem 2 ist ein Generatorregler 8 vorgesehen, der ebenfalls mit einer gleichgerichteten Drehstromspannung aus dem Drehstromgenerator 1 gespeist wird und mit einer in Fig. 1 nicht weiter dargestellten Leistungsstufe versehen ist, die den Strom für das Erregerfeldspulensystem 2 bereitstellt.

Über einen nicht dargestellten Riementrieb mit Keil- oder Poly-V-Riemen ist der Drehstromgenerator 1 in herkömmlicher Weise zum Antrieb direkt mit einer Kurbelwelle einer ebenfalls nicht dargeszellten, als Kraftfahrzeugantrieb dienenden Brennkraftmaschine gekoppelt. Durch Steuerung des durch das Erregerfeldspulensystem 2 im Erregerstromkreis 7 fließenden Erregerstromes mittels des Generatorreglers 8 ist ein genaues Einstellen des vom Generator aufnehmbaren und in elektrische Energie umsetzbaren Drehmomentes möglich. Dazu wird dem Generatorregler 8 die mittels eines Drehzahlsensors 10 gemessene momentane Drehzahl der Brennkraftmaschine zugeführt, und er ist mit einem Stromsensor 9 verbunden, der den im Erregerstromkreis 7 fließenden Erregerstrom erfaßt. Alternativ kann die momentane Drehzahl der Brennkraftmaschine auch über eine Datenbusleitung von einer Motorsteuerung bereitgestellt werden. Außerdem kann der Stromsensor 9 alternativ in den Generatorregler 8 integriert sein.

Bei Änderungen der Drehzahl der Brennkraftmaschine, insbesondere beim Beschleunigen des Kraftfahrzeuges, besteht die Gefahr, daß der Riemen, der den Drehstromgenerator 1 antreibt, durchrutscht, weil zusätzlich zum Drehmoment, das in elektrische Energie gewandelt wird, ein Drehmoment aufgebracht werden muß, welches der Winkelbeschleunigung des rotierenden Läufers des Generators 1 aufgrund seiner Trägheit entspricht. Führt das daraus resultierende Drehmoment dazu, daß die zu übertragende Kraft die Haftreibungskraft für den Riemen in den ihn antreibenden Riemenführungen übersteigt, so ist ein Durchrutschen des Riemens die Folge.

Um dies zu vermeiden, steuert der Generatorregler 8 den von seiner Leistungsstufe bereitgestellten Strom für den Erregerstromkreis 7 derart, daß auch bei Betrieb der Brennkraftmaschine mit wechselnder Last und damit einhergehenden Beschleunigungsphasen ein Durchrutschen des den Drehstromgenerator 1 antreibenden Riemens vermieden wird, d.h. der Generatorregler 8 realisiert eine Riemenschonfunktion. Dazu ist dem Generatorregler 8 eine Generatorsteuervorrichtung zugeordnet, die in Fig. 2 als Blockdiagramm dargestellt ist.

Wie in Fig. 2 dargestellt, beinhaltet die Steuervorrichtung ein Differenzierglied 20, in dem die vom Drehzahlsensor 10 gemessene oder über einen Datenbus zur Verfügung stehende Motordrehzahl bezüglich der Zeit differenziert wird, d.h. die Drehzahländerungsrate bestimmt wird. Aus der ermittelten Drehzahländerungsrate und dem mit dem Stromsensor 9 erfaßten Erregerstrom wird dann über eine Kennfeldstufe 22 ein maximaler Erregerstrom für das Erregerfeldspulensystem 2 im Erregerstromkreis 7 anhand eines entsprechend abgelegten Kennfeldes bestimmt.

In jedem Fall wird der maximale Erregerstrom nach dem Kriterium ermittelt, daß einerseits ein Durchrutschen des Riemens zuverlässig verhindert wird und andererseits unter Einhaltung dieser Bedingung noch so viel Generatorleistung wie möglich oder gewünscht erzeugt werden kann. Dies bedeutet, daß der maximale Erregerstromwert in Abhängigkeit von der ermittelten Drehzahländerungsrate dergestalt bestimmt wird, daß das über den Riementrieb von der Brennkraftmaschine auf den Generator 1 übertragene Drehmoment auf einen Riemendurchrutschverhinderungs-Grenzwert begrenzt wird, der betriebszustandsabhängig so festgelegt ist, daß es zu keinem Durchrutschen des Riemens kommt. Die zugehörige maximale Kraft, die über den Riemen während der jeweiligen Beschleunigungsphase ohne Riemenrutscherscheinungen übertragen werden kann, läßt sich für das jeweils vorliegende Motor-Generator-System vorab berechnen oder durch Versuche ermitteln. Die zugehörigen Werte des maximal erlaubten Generatorerregerstroms können dann als Kennfeld in der Kennfeldstufe 22 abgelegt werden.

In einem Begrenzungsglied 23 wird dann der ermittelte maximale Erregerstrom mit dem momentan im Erregerstromkreis 7 fließenden Erregerstrom verglichen. Am Begrenzungsglied 23 ist optional ein Ausgang 23a vorgesehen, an dem die Information bereitgestellt wird, ob der momentan im Erregerstromkreis 7 fließende Erregerstrom den ermittelten maximalen Erregerstrom überschreitet oder nicht, wenn diese Information für irgendwelche externen Zwecke gewünscht wird. Wenn der ermittelte maximale Erregerstrom kleiner ist als der momentan im Erregerstromkreis fließende Erregerstrom, steuert das Begrenzungsglied 23 die Leistungsstufe 24 des Generatorreglers 8 in der Weise, daß der im Erregerstromkreis momentan fließende Erregerstrom auf diesen maximalen Erregerstrom abgesenkt und damit begrenzt wird. Dies kann dazu führen, daß beim Beschleunigen der Brennkraftmaschine und im Falle von Lastspitzen im Bordnetz 4 des Kraftfahrzeuges unter Umständen die vom Drehstromgenerator 1 bereitgestellte elektrische Leistung nicht allein zur Energieversorgung ausreicht. In diesem Fall wird die Differenz durch die Batterie 6 des Kraftfahrzeuges ausgeglichen.

Wird umgekehrt im Begrenzungsglied 23 festgestellt, daß der ermittelte maximale Erregerstrom größer ist als der tatsächlich im Erregerstromkreis 7 fließende Erregerstrom, so erfolgt keine Beeinflussung der Leistungsstufe 24 durch das Begrenzungsglied 23.

Um zu vermeiden, daß bei Beendigung eines Beschleunigungsvorganges der Brennkraftmaschine das auf den Drehstromgenerator 1 übertragene Drehmoment schlagartig zunimmt, weil der maximale Erregerstrom nun nicht mehr drehmomentbedingt begrenzt ist, ist vorgesehen, den Erregerstrom dann in einer gesteuerten Weise, z.B. rampenförmig, allmählich wieder auf seinen ursprünglichen Wert für Stationärbetrieb des Drehstromgenerators 1 anzuheben.

Vorzugsweise sind das Differenzierglied 20, die Kennfeldstufe 22 und das Begrenzungsglied 23 in den Generatorregler 8 integriert. Alternativ können sie in einer von dem Generatorregler 8 getrennten Baugruppe untergebracht sein, der dann entsprechend die Signale vom Stromsensor 9 und vom Drehzahlsensor 10 zugeführt werden.

Es versteht sich, daß statt der beschriebenen Generatorerregerstrombegrenzung erfindungsgemäß jede andere herkömmliche Maßnahme zur Begrenzung der Generatorerregung in der Weise verwendet werden kann, daß das auf den Generator übertragene Drehmoment den betriebszustandsabhängigen Riemenrutschverhinderungs-Grenzwert nicht überschreitet.

## Patentansprüche

1. Verfahren zur Steuerung eines Generators, der mechanisch über einen Riementrieb an eine mit wechselnder Last betriebene Brennkraftmaschine angekoppelt ist, bei dem
- die zeitliche Änderung der Drehzahl der Brennkraftmaschine ermittelt und in Abhängigkeit davon die Generatorerregung eingestellt wird,
**dadurch gekennzeichnet, daß**
- das über den Riementrieb von der Brennkraftmaschine auf den Generator (1) übertragene Drehmoment durch entsprechende Begrenzung der Generatorerregung auf einen von der ermittelten Drehzahländerungsrate abhängigen Riemenrutschverhinderungs-Grenzwert begrenzt wird und dieser Riemenrutschverhinderungs- Grenzwert einem Kennfeld entnommen wird.

2. Verfahren nach Anspruch 1,
**dadurch gekennzeichnet, daß**
die Begrenzung der Generatorerregung durch Begrenzung des Erregerstroms auf einen maximalen Erregerstromwert erfolgt, der in Abhängigkeit von der ermittelten zeitlichen Änderung der Drehzahl der Brennkraftmaschine bestimmt wird.

3. Vorrichtung zur Steuerung eines Generators, der mechanisch über einen Riementrieb an eine mit wechselnder Last betriebene Brennkraftmaschine angekoppelt ist, mit
- Mitteln zur Ermittlung der zeitlichen Drehzahländerung der Brennkraftmaschine und
- Mitteln zur Einstellung der Generatorerregung in Abhängigkeit von der ermittelten zeitlichen Drehzahländerung,
**dadurch gekennzeichnet, daß**
- die Generatorerregungs-Einstellmittel (8, 20, 22, 23, 24) eine Kennfeldstufe (22) aufweisen, die das über den Riementrieb von der Brennkraftmaschine auf den Generator (1) übertragene Drehmoment durch entsprechende Begrenzung der Generatorerregung auf einen Riemenrutschverhinderungs-Grenzwert begrenzt.

4. Vorrichtung nach Anspruch nach Anspruch 3,
**dadurch gekennzeichnet, daß**
die Generatorerregungs-Begrenzungsmittel Erregerstrom-Begrenzungsmittel (20, 22, 23) umfassen, die den Erregerstrom auf einen maximalen Erregerstrom begrenzen, der in Abhängigkeit von der ermittelten zeitlichen Drehzahländerung der Brennkraftmaschine bestimmt wird.

## Claims

1. Method of controlling a generator, which is mechanically coupled via a belt drive with an internal combustion engine operated at a changing load, whereby
- the change in speed of the internal combustion engine is determined as a function of time and generator excitation is adjusted as a function thereof,
**characterised in that**
- torque transmitted from the internal combustion engine to the generator (1) via the belt drive is limited to a threshold value at which slipping of the belt is prevented depending on the detected range of speed change and this threshold value at which slipping of the belt is prevented is taken from a characteristic map.

2. Method as claimed in claim 1,
**characterised in that**
generator excitation is limited by limiting the exciter current to a maximum exciter current value, which is fixed as a function of the detected change in the speed of the internal combustion engine over time.

3. Device for controlling a generator which is mechanically coupled via a belt drive with an internal combustion engine operated at a changing load, comprising
- means for determining the speed change of the internal combustion engine as a function of time and
- means for adjusting generator excitation as a function of the determined speed change over time,
**characterised in that**
- the generator excitation adjusting means (8, 20, 22, 23, 24) has a characteristic map stage (22) which limits the torque transmitted via the belt drive from the internal combustion engine to the generator (1) by limiting generator excitation accordingly to a threshold value at which the belt is prevented from slipping.

4. Device as claimed in claim 3,
**characterised in that**
the generator excitation-limiting means has excitation current-limiting means (20, 22, 23) which limit the exciter current to a maximum exciter current set as a function of the determined speed change of the internal combustion engine over time.

## Revendications

1. Procédé de commande d'un générateur de courant accouplé mécaniquement par l'intermédiaire d'une commande par courroie à un moteur à combustion interne fonctionnant avec une charge alternante, au moyen duquel
- le changement temporel de la vitesse dudit moteur à combustion est déterminé et l'excitation du générateur est réglée, compte tenu dudit changement temporel de la vitesse,
**caractérisé en ce que** le couple transmis par le moteur à combustion au générateur (1) par l'intermédiaire de la commande par courroie est limité au moyen d'une limitation spécifique de l'excitation du générateur à une valeur limite d'anti-glissement de la courroie dépendant du taux déterminé du changement de la vitesse et que ladite valeur limite d'anti-glissement est prélevée sur un diagramme de caractéristiques.

2. Procédé selon la revendication 1, **caractérisé en ce que** la limitation de l'excitation du générateur a lieu au moyen d'une limitation du courant d'excitation à une valeur maximum du courant d'excitation déterminée en fonction du changement temporel déterminé de la vitesse du moteur à combustion.

3. Appareil de commande d'un générateur de courant accouplé mécaniquement par l'intermédiaire d'une commande par courroie à un moteur à combustion interne fonctionnant avec une charge alternante avec
- des moyens pour déterminer le changement temporel de la vitesse dudit moteur à combustion interne et
- des moyens pour régler l'excitation du générateur en fonction du changement temporel déterminé de la vitesse,
**caractérisé en ce que** les moyens de réglage (8, 20, 22, 23, 24) de l'excitation du générateur comportent un état (22) du diagramme de caractéristiques limitant le couple transmis par le moteur à combustion au générateur (1) par l'intermédiaire de la commande par courroie au moyen d'une limitation spécifique de l'excitation du générateur à une valeur limite d'anti-glissement de la courroie.

4. Appareil selon la revendication 3, **caractérisé en ce que** les moyens de limitation de l'excitation du générateur se composent de moyens de limitation du courant d'excitation (20, 22, 23) limitant le courant d'excitation à un courant d'excitation maximum déterminé en fonction du changement temporel déterminé de la vitesse du moteur à combustion.
